Europäisches Patentamt

European Patent Office

Office européen des brevets

(19)

(11) **EP 1 610 111 A2**

(12) **EUROPÄISCHE PATENTANMELDUNG**

(43) Veröffentlichungstag:
**28.12.2005 Patentblatt 2005/52**

(51) Int Cl.$^7$: **G01M 9/00**, G01M 17/007,
G01M 9/08

(21) Anmeldenummer: **05013089.7**

(22) Anmeldetag: **17.06.2005**

| | |
|---|---|
| (84) Benannte Vertragsstaaten:<br>**AT BE BG CH CY CZ DE DK EE ES FI FR GB GR HU IE IS IT LI LT LU MC NL PL PT RO SE SI SK TR**<br>Benannte Erstreckungsstaaten:<br>**AL BA HR LV MK YU** | (71) Anmelder: **Gordes, Andreas**<br>**5987 Meschede (DE)** |
| (30) Priorität: **25.06.2004 DE 102004030741** | (72) Erfinder: **Gordes, Andreas**<br>**5987 Meschede (DE)** |

(54) **Verfahren zur Simulation von Kurvenströmungen an Radfahrzeugen in Strömungskanälen mit geradliniger Messstrecke**

(57)    Die Erfindung betrifft ein Verfahren zur Simulation von Kurvenströmungen an Radfahrzeugen in Strömungskanälen, deren Meßstrecke nur einen geradlinigen Verlauf der Strömung zulassen.

Radfahrzeuge weisen die besondere Charakteristik auf, daß sie in Kurven an der Spitze unter dem größten Winkel angeströmt werden, auf Null abnehmend bis zur Hinterachse. Dieser Strömungsverlauf ist vom Kurvenradius und Radstand bestimmt und läßt sich in Windkanälen nicht nachbilden. Die Erfindung schlägt daher vor, anstelle der geraden Strömung den Strömungskörper teilkreisförmig so zu biegen, daß die Strömung in einem sich ständig änderndem Winkel auf das gesamte Fahrzeugmodell trifft, eben so, wie die Strömung bei einer real gefahrenen Kurve auftreffen würde. Um den Kurvenradius dynamisch während der Messung zu ändern, schlägt die Erfindung Vorrichtungen zur Biegung des Fahrzeuges vor. Da die Modelle auf Transportbändern rollen, macht die Erfindung darüber hinaus Vorschläge, wie die nötige Lenkbewegung zur realisieren ist.

*Fig. 4*

**Beschreibung**

Die vorliegende Erfindung betrifft ein Verfahren zur Simulation von Kurvenströmungen an Radfahrzeugen in Strömungskanälen mit geradliniger Meßstrecke und zur Simulation von dynamischer Kurvenfahrt der Modelle unter veränderbarem Kurvenradius.

Es ist bereits bekannt, daß der Motorsport bei Rundenrennen von hohen Kurvengeschwindigkeiten profitiert. Sieger eines Rennens wird oftmals nicht der schnellste Wagen auf der Gerade, sondern das Fahrzeug, welches einen Rundkurs mit hohen Kurvengeschwindigkeiten durchfahren kann. Verantwortlich für zunehmend hohe Kurvengeschwindigkeiten ist die Steigerung der Traktion in Kurven, hervorgerufen durch die Haftung der Reifen in Verbindung mit der durch aerodynamische Hilfen erzeugten Abtriebskraft.

Diese aerodynamischen Hilfen können Flügel, Leitbleche, Abrisskanten, Diffusoren und sonstige Formgebungen sein, die den Unterdruck unter dem Fahrzeug und den Überdruck über dem Fahrzeug erhöhen mit dem Ziel, die Auflagekraft der Reifen zu erhöhen. Der Reibungskegel, also die Resultierende aus Auflagekraft der Reifen und deren Reibhaftung muß zur Erlangung hoher Fliehkräfte in Kurven möglichst weit geöffnet werden. Zwar sind zur Erlangung hoher Beschleunigungswerte und noch mehr zur Erlangung hoher Verzögerungswerte große Traktionswerte auf geraden Streckenabschnitten wünschenswert, doch geht die Tendenz in der aerodynamischen Entwicklung weiterhin zur Erhöhung der Kurvengeschwindigkeiten.

Die maximale Traktion und Abtriebskraft wird in Kurven angestrebt. So ist die Aerodynamik der wichtigste Faktor beispielsweise bei einem modernen Formel-1-Auto. Trotz intensivem Einsatz computergestützter Fluidrechnungen werden die endgültigen aerodynamischen Daten im Windkanal empirisch ermittelt. Damit ist der Windkanal das wichtigste Werkzeug, um einen erfolgreichen Rennwagen zu bauen. Vergleiche hierzu "Formel 1 Aerodynamik" von Simon McBeath, erschienen im Motorbuch Verlag 2001, ISBN 3-613-02165-X sowie "Race Car Aerodynamics: Designing for Speed" von Joseph Katz, erschienen bei Bentley Publishers 1995, ISBN 0-8376-0142-8.

Bisher fehlt die Eigenschaft, Kurvenfahrt in Windkanälen geeignet zu simulieren und zu testen. Die modernsten Windkanäle für Rennfahrzeuge stehen bei Toyota Motorsport GmbH in Köln, in Betrieb genommen 2003, sowie bei der Sauber Motorsport AG in Hinwil, in Betrieb genommen 2004.

Eine solche Anlage verfügt typischerweise über eine geschlossene, geradlinige Teststrecke mit großem Durchmesser von ca. 4m, einem Gebläse von ca. 3000kW und mit Geschwindigkeiten von bis zu 300 km/h. Ein solcher Windkanal erlaubt das Einstellen von realen Fahrzeugen im Maßstab 1:1.

Bei den Testobjekten versucht der Fachmann, das Modell in der Formgebung so gut wie möglich dem realen Fahrzeug nachzuempfinden. Als Material für die Modelle dienen aus verschiedenen Gründen Faserverbundkunststoffe. Auch wenn es möglich ist, Fahrzeuge in Originalgröße einzustellen, so wird zum Großteil doch mit Modellen im Maßstab 1:1,67 bis 1:2,5 gearbeitet. So lassen sich durch Hintereinanderstellen von Modellen auch Verfolgungsfahrten simulieren.

Zur Simulation der Fahrt über eine Fahrbahnoberfläche sind die Windkanäle mit Transportbändern ausgestattet, deren Geschwindigkeit mit der Strömungsgeschwindigkeit übereinstimmt. Transportbänder werden auch Rolling Road oder Moving Ground genannt. Der Antrieb der Räder erfolgt über die Reibhaftung des Transportbandes, vorzugsweise jedoch über von außerhalb der Meßstrecke herangeführte Achsen (1), die direkt an die Räder angeflanscht sind und die Strömung nur unwesentlich beeinflussen, da sich die Antriebsmotoren außerhalb der Meßstrecke befinden. Unter dem Rollband sind Wägezellen angebracht, mit welchen sich jederzeit die Radlasten erfassen lassen.

Die Fahrzeuge sind an einer Halterung befestigt, die entweder von oben herab (2) oder von hinten (3) das Fahrzeug in der Strömung hält. Die Messung der Kräfte sowie die Simulation von Bewegungen erfolgt ebenfalls mit Hilfe dieser Halterungen, sie werden deshalb auch Model Motion System genannt.

Zur Simulation von Seitenwind (4) bzw. seitlichen Strömungen kann das gesamte Transportband im Rahmen einer Plattform gedreht werden. Hierzu müssen die gesamten Halterungen jedoch mitbewegt werden, was in vielerlei Hinsicht nachteilig ist. Für jeden Meßwinkel erfolgt quasi eine neue Montage der Versuchsvorrichtung. Simuliert wird in der Meßstrecke dann die Summe aus Fahrtgeschwindigkeit und Seitenwind. Der Drehwinkel der Plattform ergibt sich aus dem angestrebtem Luvwinkel.

Ein Problem ist, daß durch diese Meßtechnik Kurvenströmung nicht simuliert wird.

Die Kurvenströmung ergibt sich aus dem Ackermann Winkel, der den eingeschlagenen Winkel δ einer Deichsel mit starrer Achse (5) bezeichnet. Fährt also ein Wagen mit einer um den Ackermann Winkel δ eingeschlagenen Vorderachse um eine Kurve, so wird das Fahrzeug in Höhe der Achsmitte seitlich in dem gleichen Winkel δ angeströmt. Dieser Anströmwinkel nimmt zur Hinterachse hin cosinusförmig ab, bis er schließlich an der Hinterachse parallel zur Fahrzeugachse anliegt, bzw. exakt von vorne kommt (6). Hinter der Hinterachse wechselt die Strömung nun ihre Richtung und strömt das Fahrzeug vom Kurvenäußeren her an, cosinusförmig zunehmend, je weiter das Heck über die Hinterachse hinausragt (7). Vor der Vorderachse wird das Fahrzeug hingegen zunehmend vom Kurveninneren her angeströmt, cosinusförmig anwachsend, je länger das Fahrzeug über die Vorderachse hinausragt (8).

Dieser Aspekt ist bei Rennfahrzeugen nicht zu unterschätzen, zumal die Hauptabtriebshilfen möglichst weit die zugelassenen Ausmaße ausnutzen müssen. Die Kurvenströmung bewegt sich also auf einer Kreisbahn um das Fahrzeug herum, bestimmt durch den Ackermann Winkel δ, durch die fiktive Hinterachse und durch den Mittelpunkt der fiktiven Verbindungsachse der Vorderräder. Der Abstand zwischen Hinterachse und fiktiver Verbindungslinie der Vorderachse sei als Radstand S bezeichnet.

Der Erfindung liegt nun die Aufgabe zugrunde, die Strömungsverhältnisse von Kurvenfahrten in Windkanalanlagen mit geradliniger Meßstrecke zu simulieren. Und zwar auch unter Berücksichtigung von Meßstrecken mit Transportband, so daß die Umströmung von drehenden Rädern in Kurven simuliert werden kann. Als Kenngröße soll dabei der Ackermann Winkel δ dienen.

Die Erfindung soll weiterhin Verfahren betreffen, die es ermöglichen, dynamisch den Ackermann Winkel δ und damit den Kurvenradius zu verändern, ohne daß dabei die Fahrt im Windkanal unterbrochen werden muß.

Eine solche Erfindung ist gewerblich interessant, da sie die Simulationsbedingungen in Windkanälen näher an die Realität auf der Rennstrecke heranführt und damit zu genaueren Ergebnissen in der Entwicklung von Fahrzeugen führt. Es ist davon auszugehen, daß diese Ergebnisse den gewünschten Gesamtabtrieb von der Gerade weiter in den Kurvenbereich hineinschieben werden und damit zu schnelleren Kurvenfahrten führen werden.

Gefunden wurde nun ein Verfahren zur Simulation von Kurvenströmungen an Radfahrzeugen in Strömungskanälen mit geradliniger Meßstrecke und zur Simulation von dynamischer Kurvenfahrt der Modelle unter veränderbarem Kurvenradius, dadurch gekennzeichnet, daß anstelle der geradlinigen Strömung, die nicht gebogen werden kann, das Fahrzeugmodell um den Ackermann Winkel δ von der Hinterachse bis zur Vorderachse und darüber hinaus teilkreisförmig gegen die Kurvenrichtung gebogen wird, so daß die Strömung in einem sich ständig änderndem Winkel auf das gesamte Fahrzeugmodell trifft, eben so, wie die Strömung bei einer real gefahrenen Kurve auftreffen würde.

Die Erfindung betrifft ein Verfahren zur Simulation von Kurvenströmungen.

Kurvenströmungen bewegen sich teilkreisförmig um ein Fahrzeug herum. Es wird davon ausgegangen, daß die Strömung in Strömungskanälen mit gerader Meßstrecke aus verschiedenen Gründen nicht gebogen werden kann. Um dieser Problematik zu entgehen, soll bei der Erfindung anstelle der Strömung der Strömungskörper selbst gekrümmt werden.

Im Rennsport beispielsweise ist es besonders wünschenswert, das Strömungsverhalten in Kurven zu untersuchen, da die hohen Kurvengeschwindigkeiten in Rennen auf Rundkursen über Erfolg und Mißerfolg eines Rennwagens entscheiden. Da die Aerodynamik zum wichtigsten Faktor im Rennsport geworden ist, sind Untersuchungen am Rennfahrzeug im Windkanal erforderlich. Bisher können in Windkanälen nur Geradeausfahrten und Fahrt bei Seitenwind (4) untersucht werden. Jedoch keine Kurvenströmungen.

Die Erfindung legt zugrunde, daß ein Fahrzeug in Kurven dem Ackermann Winkel δ folgt. Dieser Winkel definiert über den Radstand den Kurvenradius. In der Kurve strömt die Umgebungsluft teilkreisförmig um das Fahrzeug herum. Der größte Anströmwinkel γ tritt an der Spitze des Fahrzeuges auf (8). Er nimmt gemäß der Formel

$$\gamma_{(\delta,y)} = \delta * y/S$$

mit Radstand $S = r_h * \tan\delta$

entlang der Mittellinie des Fahrzeuges linear nach hinten hin ab. In Höhe der Achsmitte der Vorderachse wird das Fahrzeug seitlich im Winkel γ=δ angeströmt, da hier y=S ist. Dieser Anströmwinkel nimmt zur Hinterachse hin weiter linear ab (6), bis er schließlich an der Hinterachse parallel zur Fahrzeugachse anliegt, bzw.

exakt von vorne kommt. Hinter der Hinterachse wechselt die Strömung ihre Richtung und strömt das Fahrzeug vom Kurvenäußeren her an, linear zunehmend, je weiter das Heck über die Hinterachse hinausragt (7).

Da diese lineare Winkeländerung in Strömungskanälen dynamisch nicht reproduzierbar ist, schon allein weil die Strömungsänderung vom Radstand abhängig ist, liegt der Erfindung der Gedanke zugrunde, daß anstelle der Strömung das gesamte Fahrzeug entsprechend einem simulierten Ackermann Winkel δ gebogen wird, und zwar zum Kurvenäußeren hin. Der Drehpunkt bzw. das Koordinatenzentrum der Biegung liegt im Schnittpunkt der Fahrzeugmittellinie und der Hinterachse des Fahrzeuges (9).

Da Windkanalfahrzeuge aus Faserverbundkunststoffen gefertigt werden, können diese durch hinzufügen von chemischen Weichmachern bereits im Bau formflexibel gefertigt werden. Die Steifigkeit gegen Verwinden der Karosserie können zwei längs eingebaute Holme übernehmen, die in Z-Richtung hohe Last aufnehmen können, in X-Richtung jedoch sehr leicht biegsam sind.

Sollten beim Biegungsvorgang trotzdem Verwindungskräfte auf die Räder wirken, so können diese zusätzlichen Kräfte durch eine Meßdatenaufnahme an den Wägezellen ohne Fahrt ermittelt und später heraussubtrahiert werden. Andererseits können Verwindungskräfte erfindungsgemäß zur Simulation von Fliehkräften in Kurven und dadurch bedingten Federwegsänderungen der Radaufhängungen benutzt werden.

Das erfindungsgemäße Verbiegen der Karosserien kann mit beliebigen Vorrichtungen erfolgen. Es ist jedoch zu beachten, daß die Vorderräder gegengelenkt werden müssen, so daß diese bei jedem simulierten Ackermann Winkel δ trotzdem parallel zur Windkanalachse und Transportbandrichtung laufen (10). Die Lenkung der Vorderräder kann durch eine interne Vorrichtung erfolgen, durch eine externe Halterung oder durch fahrdynamische Eigenschaften wie eingebauter Lenksturzwinkel, kurz Sturz.

Es ist zu beachten, daß das Fahrzeug zur Durchführung der erfindungsgemäßen Biegung im neutralen Koordinatenzentrum (9) aufgehängt werden muß (2), da dies die einzige Stelle ist, die durch den Biegevorgang nicht auswandert, sondern ortsfest und daher neutral ist. Es können zur Aufhängung allerdings auch Punkte hinter der Hinterachse gewählt werden (3), wenn davon abgesehen wird, daß die Karosserie aufgrund vernachlässigbar kleiner Winkel hinter der Hinterachse verbogen wird. In einem solchen Fall bietet sich die Aufhängung des Fahrzeuges an einer Halterung an, die von hinten das Fahrzeug in der Strömung hält.

Die Erfindung betrachtet interne und externe Verbiegemechanismen. Bei internen Mechanismen befinden sich die Vorrichtungen zum Verbiegen der Karosserie vollständig innerhalb derselben, so daß auch die gesamte Krafterzeugung und - abstützung intern erfolgen. Bei externen Verbiegemechanismen greifen äußere Vorrichtungen auf das Fahrzeug zu und verbiegen es erfindungsgemäß. Hier erfolgen Krafteinleitung und -abstützung von außen. Letztendlich hängt es von den Platzverhältnissen und der Formgebung des Modells ab, welche Verbiegemechanismen gewählt werden. Eventuell bietet sich eine Kombination von Vorrichtungen an.

Steuerbefehle für interne Verbiegemechanismen können beispielsweise mit Hilfe von Funkfernsteuerungen oder Kabeln gesendet werden. Dies ermöglicht eine autarke Systemarbeitsweise, die die restliche Umgebung im Windkanal nicht beeinflußt. Die Kraftaufbringung zum Verbiegen der Karosserie kann dann mit Hilfe von eingebauten Seilzügen und Seilschüben erfolgen, mit gelenkigen Schubstangen, mit Kettenantrieben, oder mit hydraulisch oder pneumatisch angetriebenen Zylindern oder mit sonstiger Mechanik. Beim Einbau ist möglichst darauf zu achten, daß ein Verwinden des gesamten Fahrzeuges verhindert wird. Die Wegverlängerung bzw. Streckung $\Delta S$ einer internen Mechanik in Abhängigkeit vom simulierten Ackermann Winkel δ und dem Abstand der Vorrichtung $\Delta x$ parallel zur Fahrzeugmittellinie ergibt sich aus

$$\Delta S_{(\delta)} = \Delta x * \delta$$

wobei δ in Bogenmaß angegeben wird.

Externe Verbiegemechanismen können beispielsweise durch das Model Motion System (2) angetrieben werden, oder die Karosserie wird mit Hilfe der externen Antriebsachsen (1) verbogen oder mit zusätzlichen Schubstangen oder Seilzügen ausgerichtet.

Eine einfache Realisierung der Erfindung durch einen externen Verbiegemechanismus ist die Biegung der Karosserie mit Hilfe eines erfindungsgemäß teilkreisförmig gebogenen Torsionsrohres (11), welches im Modellrumpf verborgen ist. In den Lagerungspunkten muß dieses Rohr in senkrechter Richtung frei gleiten, z.B. innerhalb zwei längs eingebauter Holme, die in Z-Richtung hohe Last aufnehmen können, in X-Richtung jedoch sehr leicht biegsam sind. Bei einem Lenkwinkel von δ=0 blickt die Richtung der Rohrbiegung ausschließlich nach unten, das heißt von oben gesehen weist das Rohr noch keine Krümmung auf. Zur Erzeugung eines simulierten Ackermann Winkels δ>0 wird das Rohr nun verdreht und die Karosserie wird so in Richtung x gebogen, bis der gewünscht Winkel erreicht ist. Die Krümmung des Torsionsrohres muß größer sein als der angestrebte Ackermann Winkel δ.

Zum leichteren Verständnis dieser Mechanik sei erwähnt, daß voraussichtlich nur kleine Winkel zur Simulation von Kurvenfahrten nötig sind, so daß das eingebaute Torsionsrohr bei einer Drehung trotz der engen Platzverhältnisse (11) nur wenig nach oben auswandert. Der optimale Kurvenradius, für den maximaler Abtrieb zu finden ist, muß erst mit den Verfahren der Erfindung über den optimalen Ackermann Winkel δ erforscht werden.

Erfindungsgemäß ist es von Vorteil, wenn die Biegung sowohl nach links als auch nach rechts erfolgen kann. Dies ermöglicht eventuell die Simulation des Einflusses der Strömung auf das Fahrzeug bei Kurvenwechsel. Weiterhin weist die Bauweise aktueller Rennfahrzeuge einen Trend zur Asymmetrie auf und durch die Möglichkeit beide Kurvenrichtungen zu testen, kann dieser Asymmetrie Rechnung getragen werden.

Die Vorderräder werden parallel zur Strömungsrichtung gehalten, indem beispielsweise ein auf das Rohr gesetzter Excenter (12) erfindungsgemäß gegen die Drehrichtung arbeitet und so die Lenkstange in die Kurvenbewegung verschiebt.

Das hier beschriebene Torsionsrohr kann mit Hilfe der externen Halterung, an der das Fahrzeug im Strömungskanal gehalten wird, angetrieben werden. Führt die Halterung weitgehend senkrecht von der Kanaldecke nach unten in das Fahrzeug (2), so muß sie im neutralen Koordinatenzentrum eingeleitet werden. Die Verdrehung des Torsionsrohres kann mit Hilfe zweier Kegelzahnräder und einem Gegenlager erfolgen. Es bietet sich hierfür auch ein Zahnriemen, ein Kettenantrieb oder ein sonstige Übertragungsmechanik an.

Einfacher ist die Möglichkeit, das Torsionsrohr hinter der Hinterachse geradlinig aus dem Fahrzeug herauswachsen zu lassen und eine Fahrzeugaufhängung von hinten in das Torsionsrohr fest einzuführen (3). So bleibt mehr Spielraum zur Einleitung der Drehung außerhalb des Modells.

Anstelle eines Torsionsrohres kann auch ein Geradliniges Werkstück mit entsprechend teilkreisförmig angebauten Excentern, die von innen gegen die Karosserie drücken, verwendet werden.

Abschließend sei im Rahmen der Erfindung noch die Problematik des Radantriebes gelöst. Alle vier Räder werden mit Hilfe von extern angeflanschten Achsen angetrieben (1). Da die Hinterachse unbeweglich bleibt, ist hier keine Änderung der Antriebsart erforderlich. Die Antriebe der Vorderräder müssen jedoch mitbewegt werden.

Die Kalkulation für diese Bewegung ergibt sich wie folgt: Sei der Abstand zwischen den beiden Anlenkachsen der Vorderradaufhängungen als Weite W bezeichnet. So muß die gesamte Antriebsvorrichtung der Vorderräder den gleichen Weg verfahren, wie die Anlenkpunkte bei der Simulation des Ackermann Winkels $\delta$ zurücklegen (13). Die Koordinatenbeschreibung für diese Bewegung lautet

$$y=S*\cos\delta+W/2*\sin\delta$$

$$x=S*\sin\delta-W/2*\cos\delta$$

Die Kurvenbeschreibung für diese Bewegung lautet

$$y_{(X)}=S*\cos(\arcsin(x/S))+W/2*\sin(\arccos(-2x/W))$$

Angesichts dieser komplizierten, überlagerten Kurvenbewegung, die die Antriebsvorrichtung der Vorderräder mitfahren muß (13), empfiehlt sich erfindungsgemäß die Krafteinleitung für den Biegevorgang zusammen mit den Antriebsachsen der Vorderräder (1).

Insgesamt erfordert die Erfindung eine aufwändige Denkweise für den ohnehin schon komplizierten Aufbau von Fahrzeug, Moving Ground, Model Motion System, Wägesensoren etc. in der Meßstrecke. Ein erfindungsgemäßes Verbiegen liegt der Realität der Fahrzeuge fern, da normalerweise versucht wird, im Strömungskanal möglichst exakt die reale Formgebung nachzubilden. Für den Fachmann sieht die gekrümmte Formgebung eines Testobjektes daher nicht wirklichkeitsnah aus und ist schwer vorstellbar.

Die Erfindung bietet jedoch deutliche Vorteile gegenüber den derzeitigen Meßverfahren.

Die gewerblichen Vorteile der Erfindung ergeben sich in erster Linie durch die erwartungsgemäße Verbesserung der Aerodynamik der Fahrzeuge in Kurvenfahrten. Der Abtrieb in Kurven kann mit Hilfe der Erfindung erstmals realitätsnah im Strömungskanal untersucht werden. Entscheidet sich der Anwender für eine dynamische Veränderung des Kurvenradius während der Messung, können auch Strömungscharakteristika bei Kurvenwechsel untersucht werden.

Weitere gewerbliche Vorteile der Erfindung ergeben sich auch durch das Entstehen taktischer Vorteile. Indem die Aerodynamik stärker ins Kurveninnere optimiert werden kann, während die Aerodynamik der Geradeausfahrt entlastet wird, ergeben sich neue Konstellationen für die Renntaktik, z.B. beim Treibstoffverbrauch. Weiterhin kann durch das erfindungsgemäße Messverfahren die Stabilität der Fahrzeuge verbessert werden, da nun die Lasten im Kurveninneren besser ausgemessen werden können. Eventuell kann die Erfindung sogar auf die Optimierung des Radstandes hinwirken.

Die Erfindung birgt auch betriebswirtschaftliche Vorteile durch die Verwendung von Vorrichtungen zur dynamischen Verstellung des Kurvenradius bzw. des simulierten Ackermann Winkels. Aufwändige Umbaumaßnahmen entfallen, dadurch werden längere Meßzeiten im Strömungskanal erzielt. Da die Windkanäle der Rennteams ohnehin in Vollzeit unter Benutzung stehen, ist gerade dieser Aspekt einer dynamischen Verstellvorrichtung nicht zu unterschätzen. Weiterhin werden Schäden an der Windkanalausrüstung, verursacht durch Umbauten, verringert. Aber auch die Kalibrierung der Messanlage nach einem Wechsel der Strömungsrichtung entfällt.

Der Hauptgedanke der Erfindung beruht auf der Möglichkeit, den Strömungskörper zu krümmen. Ein Anfang für den Anwender ist ein Modell im gekrümmten Zustand zu bauen, fixiert auf einen Kurvenradius. In späteren Versuchen kann ein flexibel biegsames Modell in Kombination mit einer Verstellvorrichtung eingesetzt werden. Dann wird das gesamte Potential der hier beschriebenen Erfindung ausgeschöpft.

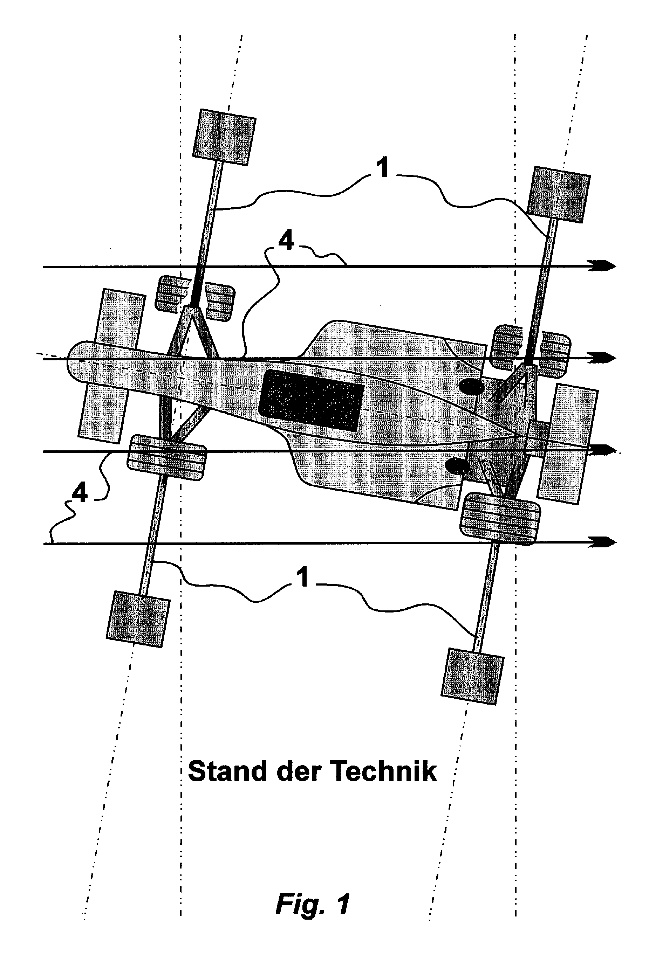

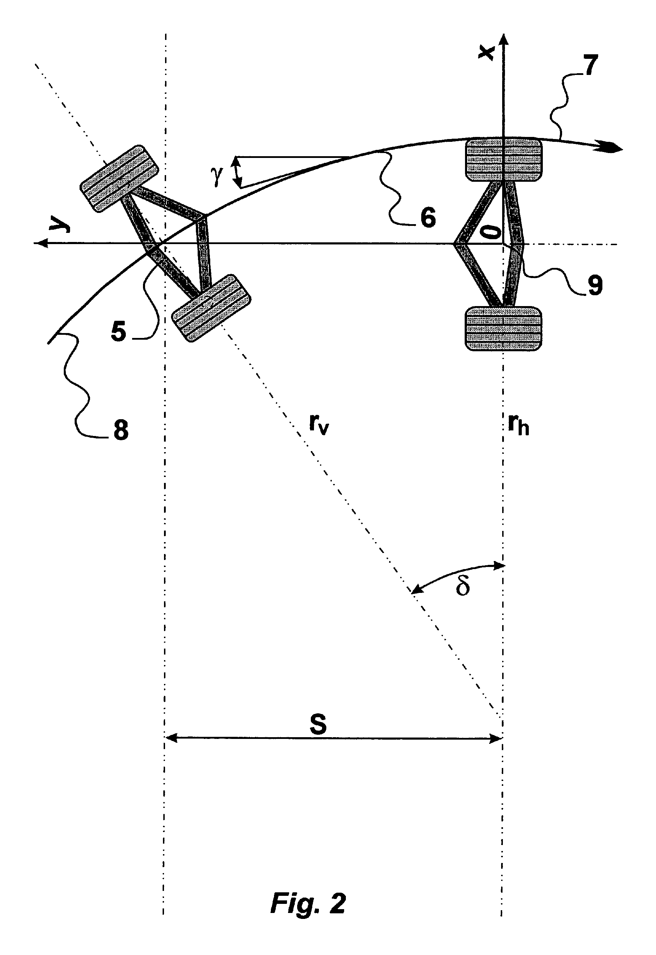

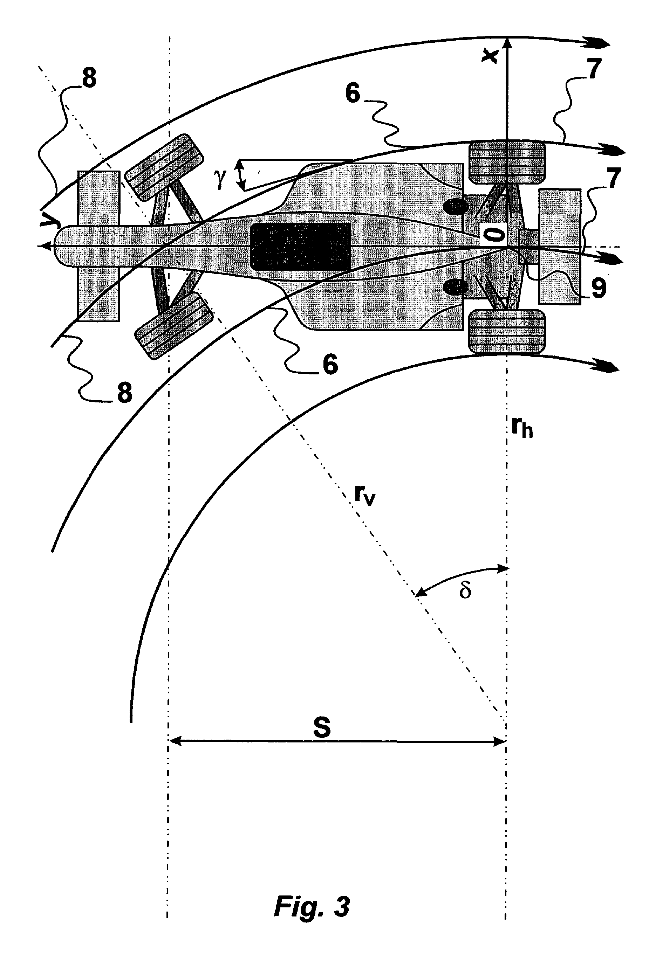

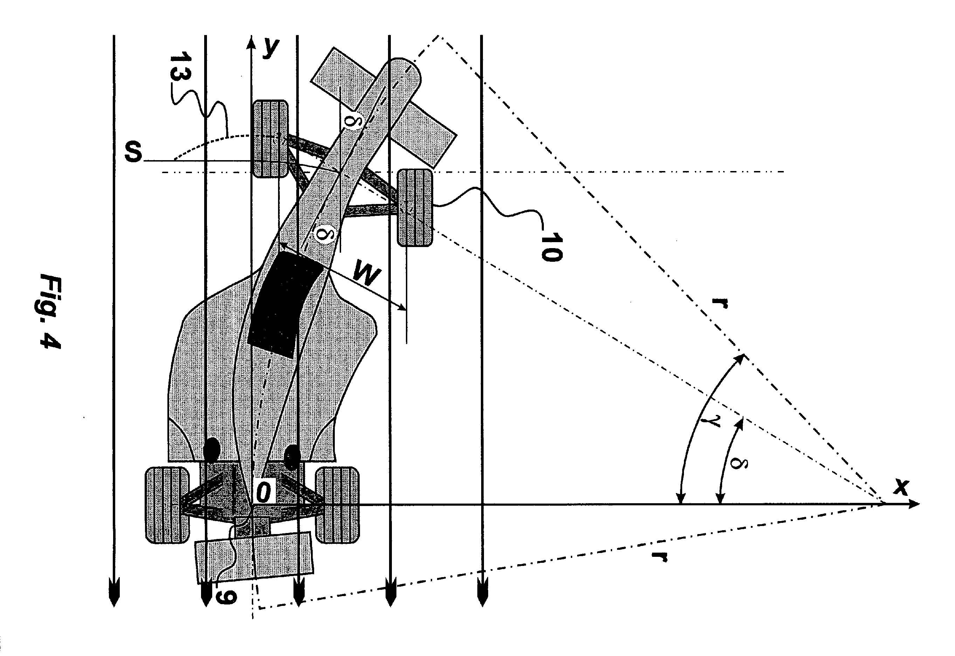

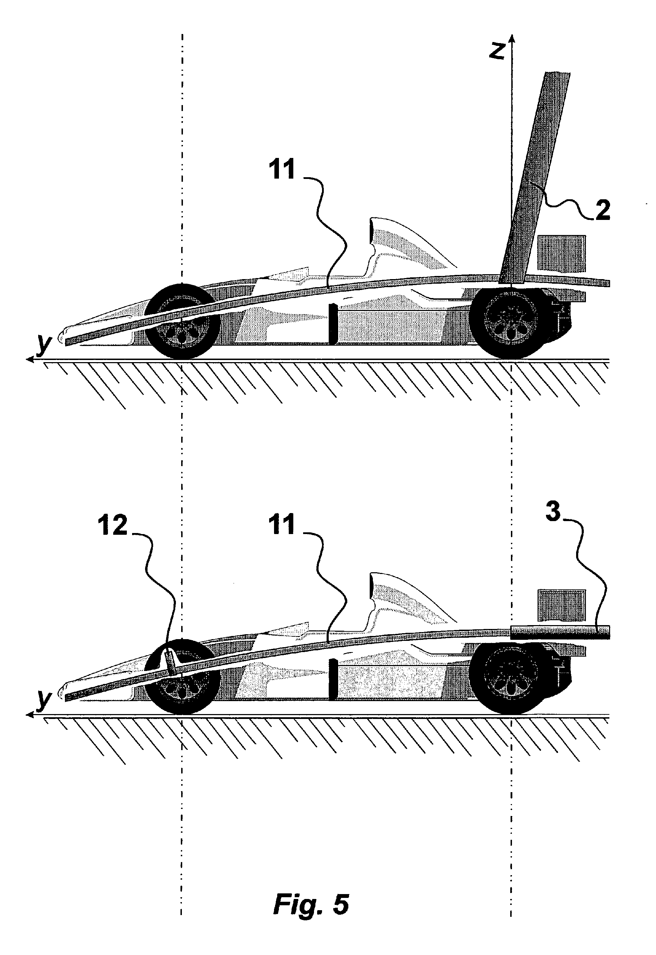

**Patentansprüche**

1. Verfahren zur Simulation von Kurvenströmungen an Radfahrzeugen in Strömungskanälen mit geradliniger Meßstrecke und zur Simulation von dynamischer Kurvenfahrt der Modelle unter veränderbarem Kurvenradius, wobei anstelle der geradlinigen Strömung, die nicht gebogen werden kann, das Fahrzeugmodell um den Ackermann Winkel $\delta$ von der Hinterachse bis zur Vorderachse und darüber hinaus teilkreisförmig gegen die Kurvenrichtung gebogen wird, so daß die Strömung in einem sich ständig änderndem Winkel auf das gesamte Fahrzeugmodell trifft, eben so, wie die Strömung bei einer real gefahrenen Kurve auftreffen würde.

2. Verfahren nach Anspruch 1, **dadurch gekennzeichnet, dass** das Fahrzeugmodell im gekrümmten Zustand starr gebaut ist, fixiert auf einen Kurvenradius, ohne dass beabsichtigt ist, es während der Messung zu verbiegen und anderen Kurvenradien zuzuführen.

3. Verfahren nach einem der Ansprüche 1 bis 2, **dadurch gekennzeichnet, daß** der Drehpunkt bzw. das Koordinatenzentrum der Biegung im Schnittpunkt der Fahrzeugmittellinie und der Hinterachse des Fahrzeuges liegt (9).

4. Verfahren nach einem der Ansprüche 1 bis 3, **dadurch gekennzeichnet, daß** die Vorderräder bei jedem simulierten Ackermann Winkel $\delta$ parallel zur Richtung von Strömung, Transportband und ursprünglicher Längsachse gegengelenkt werden (10).

5. Verfahren nach einem der Ansprüche 1 bis 4, **dadurch gekennzeichnet, daß** die Biegung sowohl nach links als auch nach rechts erfolgen kann.

6. Verfahren nach einem der Ansprüche 1 bis 5, **dadurch gekennzeichnet, daß** Verwindungskräfte zur Simulation von Fliehkräften in Kurven und **dadurch** bedingten Federwegsänderungen der Radaufhängungen benutzt werden können.

7. Verfahren nach einem der Ansprüche 1 bis 6, **dadurch gekennzeichnet, daß** das Fahrzeug zur Durchführung der Biegung im neutralen Koordinatenzentrum (9) aufgehängt wird (2), da dies die einzige Stelle ist, die durch den Biegevorgang nicht auswandert, sondern ortsfest und daher neutral ist.

8. Verfahren nach einem der Ansprüche 1 bis 7, **dadurch gekennzeichnet, daß** zur Aufhängung des Fahrzeuges auch Punkte hinter der Hinterachse gewählt werden (3) können, wenn davon abgesehen wird, daß die Karosserie aufgrund vernachlässigbar kleiner Winkel hinter der Hinterachse verbogen wird.

**Stand der Technik**

*Fig. 1*

*Fig. 2*

*Fig. 3*

*Fig. 4*

*Fig. 5*